# FASCICULE DE BREVET EUROPEEN

(11) **EP 0 983 497 B1**
(45) Date de publication et mention de la délivrance du brevet: **02.05.2003**
(21) Numéro de dépôt: 98922554.5
(22) Date de dépôt: 22.05.1998
(51) Int. Cl.: G01N 15/08

(54) **APPAREILS POUR LA TITRATION DES GAZ ET LE CYCLAGE D'UN MATERIAU ABSORBANT OU ADSORBANT**
VORRICHTUNG ZUR TITRATION UND ZIRKULATION VON GASEN UND ZIRKULATION EINES ABSORBERS ODER EINER ADSORBIERENDEN SUBSTANZ
APPARATUS FOR TITRATION AND CIRCULATION OF GASES AND CIRCULATION OF AN ABSORBENT OR ADSORBENT SUBSTANCE

(30) Priorité: 22.05.1997 CA 2207149
(43) Date de publication de la demande: 08.03.2000
(73) Titulaire: HYDRO-QUEBEC, Montréal Québec H2Z 1A4 (CA)
(72) Inventeur: SCHULZ, Robert, Sainte-Julie, Québec J0L 2S0 (CA); BOILY, Sabin, Chambly, Québec J3L 5M6 (CA); HUOT, Jacques, Sainte-Julie, Québec J0L 2S0 (CA)
(74) Mandataire: Texier, Christian
(86) Numéro de dépôt international: CA9800505
(87) Numéro de publication internationale: WO98053299

(56) Documents cités:
- EP-A- 0 501 811
- EP-A- 0 689 044
- DE-A- 3 940 169
- FR-A- 2 683 043

## Description

### Domaine technique de l'invention

La présente invention a pour objet un appareil perfectionné pour la titration des gaz, lequel peut servir entre autres à la détermination des propriétés de stockage des hydrures métalliques.

L'invention a également pour objet un appareil dit "de cyclage", qui permet d'évaluer le comportement d'une substance lorsque cette substance est soumise à un grand nombre de cycles d'absorption ou adsorption/désorption d'un gaz.

Cet appareil de cyclage peut notamment servir à évaluer la dégradation des propriétés de stockage d'un hydrure métallique soumis à des cycles d'absorption/désorption d'hydrogène.

### Brève description de l'état de la technique

Il existe actuellement des appareils spécialement conçus pour la titration des gaz. Ces appareils servent notamment à déterminer la capacité d'absorption en hydrogène et, de là, les propriétés de stockage des hydrures métalliques. Dans ce dernier cas, ils sont plus particulièrement utilisés pour:
- évaluer la capacité de stockage des hydrures métalliques en fonction de la pression d'opération (Pression=f(H/M) où H est le nombre d'atomes d'hydrogène et M le nombre d'atomes de métal); et
- évaluer la cinétique d'absorption et de désorption (dynamique de réaction) des hydrures métalliques (H/M=f(temps)).

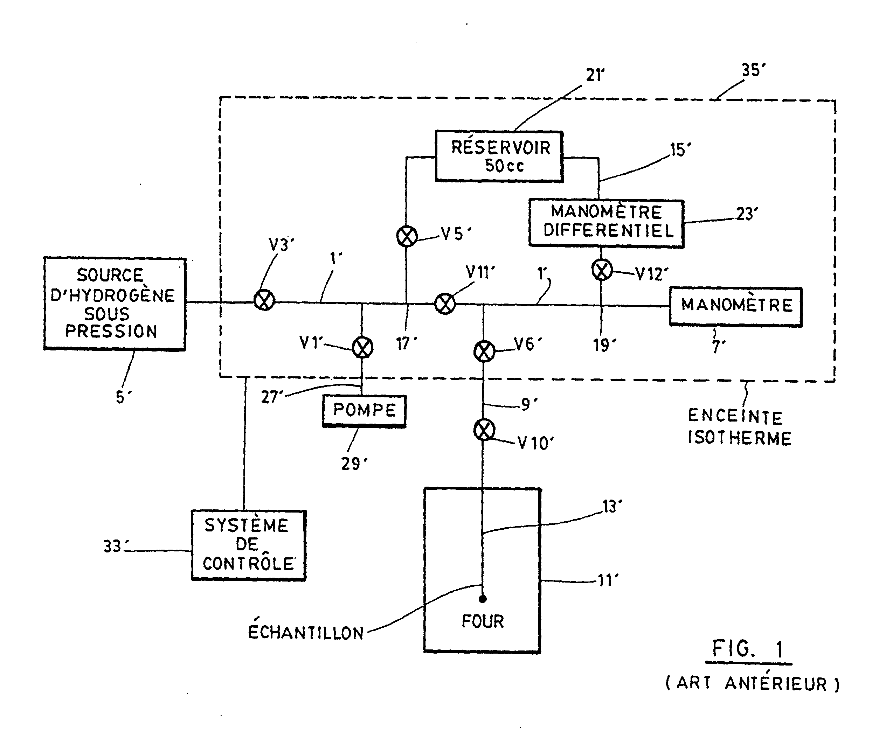

La Figure 1 illustre de façon schématique la structure d'un exemple d'appareil existant utilisé pour la titration d'hydrogène. Cet appareil se trouve décrit dans un article de Pascal Tessier intitulé "Hydrogen Storage in Metastable Fe-Ti", daté de 1995. Cet article fait partie de la thèse de doctorat de Pascal Tessier, qui a été soumise à la Faculté des Etudes Supérieures de l'Université McGill à Montréal.

Comme on peut le constater, cet appareil existant comprend une conduite principale 1' qui est reliée par une valve V3' à une source d'hydrogène sous pression 5', et sur laquelle est montée un capteur de pression (manomètre) 7' pour mesurer la pression totale d'hydrogène dans le circuit.

L'appareil comprend également une première conduite de dérivation 9' qui relie la conduite principale via une valve V6' à une "chambre de mesure" 13' ayant la forme d'un tube dans lequel peut être introduit un échantillon de la substance dont les propriétés d'absorption ou d'adsorption sont à mesurer. Le tube 13' est disposé dans un four 11' dont la température peut être ajustée à volonté en fonction de la mesure à effectuer.

L'appareil comprend en outre une seconde conduite de dérivation 15' ayant une première extrémité 17' reliée à la conduite principale 1' en amont de la jonction de celle-ci avec la première conduite de dérivation 9', et une seconde extrémité 19' reliée à la conduite principale en aval de la jonction de celle-ci avec la première conduite à dérivation. Cette seconde conduite de dérivation 15' inclut un petit réservoir 21' de 50cc et un capteur de pression différentielle 23'. Une valve V11' est disposée sur la conduite principale 1' entre la jonction 17' et la première conduite de dérivation 9'. Deux autres valves V5' et V12' sont respectivement disposées sur la seconde conduite de dérivation 15' entre d'une part, le réservoir 21' et la jonction 17' et, d'autre part, le capteur de pression différentielle 23' et la jonction 19'.

L'appareil comprend enfin une troisième conduite de dérivation 27' reliant une pompe 29' via une valve V1' à la conduite principale 1' en amont de la jonction 17'.

Toutes les valves ci-dessus mentionnées sont opérables à distance à l'aide d'un système de contrôle informatisé 33'. Les deux capteurs de pression 7' et 23' sont aussi reliés au système de contrôle. La plupart des composantes de l'appareil sont isolées dans une enceinte isotherme 35', illustrée en pointillés. Une valve manuelle V10' est disposée sur la conduite de dérivation 9'. Cette valve manuelle V10' est gardée en permanence ouverte sauf lors de l'insertion de l'échantillon.

En usage, après un calibrage approprié, on commence par faire le vide dans l'ensemble du système en fermant la valve V3' et en ouvrant toutes les autres pour relier toutes les conduites, le tube porte-échantillon 13' et le réservoir 21' à la pompe 29'. on ferme alors toutes les valves et on amorce les mesures en ajustant la source d'hydrogène à une pression donnée. On ouvre la valve V3' puis on la referme. On ouvre alors en séquence les valves V5', V11' et V12'. Après une pause, on ferme la valve V5' puis après une autre pause, on ouvre la valve V6' et on amorce la mesure en recueillant les données fournies par les deux capteurs de pression 7' et 23'.

Ceci peut être répété plusieurs fois, en augmentant la pression d'hydrogène, de façon à obtenir des courbes isothermes de pression-composition.

Si les appareils existants de titration des gaz, tel que celui-ci dessus décrit, sont opérants, ils sont sujets à de très sévères limitations quant à leur usage, à cause de leur temps de réponse et de la saturation de leur capteur de pression différentielle, qui réduisent la plage utile d'opération de l'appareil, la sensibilité et la limite de détection de celui-ci.

Ce problème est d'autant plus important que certains hydrures métalliques tels que les alliages nanocristallins décrits dans les demandes de brevets récemment publiées sous les numéros CA-A-2,117,158 et WO-A-96/23906 avec désignation de la Demanderesse comme l'un des co-propriétaires, ont des cinétiques d'absorption et de désorption extrêmement rapides.

D'un point de vue pratique, il est possible d'augmenter le domaine d'utilisation en modifiant les séquences d'ouverture des valves d'admission. Toutefois, le temps d'équilibre du système est plus lent, ce qui entraîne la perte de données importantes au début de chaque mesure.

Il y a donc actuellement un réel besoin pour un appareil de titration de gaz dont le temps de réponse serait amélioré et dont le capteur de pression différentielle serait moins sujet à saturation, avec l'inconvénient majeur que cela provoque, à savoir une diminution du domaine d'utilisation de l'appareil, exprimé en quantité d'hydrure métallique par rapport au seuil de sensibilité et à la pression maximale de travail, et ce tant en mode PCT [(pression=f(H/M)] qu'en mode dynamique [(H/M=f(temps)].

D'autre part, il n'existe pas actuellement, du moins à la connaissance de la Demanderesse, d'appareils disponibles sur le marché, qui permettent de réaliser rapidement et de façon ultimé des mesures de titration à deux pressions différentes et sous deux températures différentes, en vue d'évaluer une substance telle qu'un hydrure et plus précisément l'efficacité de cet hydrure lorsqu'il est soumis à un grand nombre de cycles d'absorption-désorption d'hydrogène.

Il a déjà été proposé d'utiliser pour ce faire des appareils de titration de type conventionnel. Toutefois, à cause des délais causés par des temps d'équilibre relativement longs pour la température des fours de même que pour les pressions (rééquilibrage à chaque cycle), ces appareils sont mal adaptés au cyclage, où il convient de changer la température du four de même que les pressions rapidement au fur et à mesure de la prise des mesures, et ce entre chaque cycle.

Il y a donc là-encore un besoin pour un appareil de cyclage permettant d'effectuer des cycles d'absorption ou adsorption/désorption à deux températures et deux pressions d'opération de manière rapide, efficace et performante.

### Résumé de l'invention

La présente invention répond aux deux besoins ci-dessus évoqués en fournissant:
d'une part, un nouvel appareil de titration des gaz ayant un temps de réponse amélioré, une plage dynamique plus importance du point de vue quantité de poudre utilisable et pression maximale accessible et une sensibilité accrue; et
d'autre part, un appareil de cyclage permettant une réduction considérable du temps d'analyse et de détermination des propriétés de matériaux absorbants ou adsorbants lors d'un grand nombre de cycle d'absorption-désorption.

L'appareil de titration de gaz selon l'invention comprend:
- une conduite principale (1) reliée par un valve (V3) à une source de gaz sous pression (5), cette conduite principale étant également reliée à un premier capteur de pression (7a);
- une première conduite de dérivation (9) reliant la conduite principale (1) via une valve (V6) à un tube porte-échantillons (13) qui est disposé dans un four (11) à température ajustable et est destiné à recevoir un échantillon d'une substance dont les propriétés d'absorption ou adsorption/désorption du gaz sont à mesurer;
- une seconde conduite de dérivation (15) ayant des extrémités 17, 19 reliées à la conduite principale, au moins une (19) de ces extrémités étant en aval de la première conduite de dérivation (9), cette seconde conduite de dérivation reliant en série une valve (V5), un réservoir (21) et un capteur de pression différentielle (23);
- une troisième conduite de dérivation (27) reliant une pompe (29) via une valve (V1) à la conduite principale (1);
- une enceinte isotherme (35) pour maintenir à une température stable et contrôlée les conduites et valves; et
- un système de contrôle (33) permettant d'ajuster et contrôler à volonté la température du four (11), la pression du gaz et les valves en temps réel.
   Cet appareil est caractérisé en ce qu'il comprend en outre:
- une quatrième conduite de dérivation (37) connectée via une valve (V7) à un tube de référence (39) qui est de même caractéristique que le tube porte-échantillon et est disposé avec ce dernier dans le four (11), ladite quatrième conduite étant reliée à la seconde conduite (15) entre le réservoir (21) de celle-ci et le capteur de pression différentielle (23).

Comme on peut donc l'apprécier, l'appareil de titration selon l'invention se distingue principalement des appareils existants en ce qu'il inclut un tube référence à l'intérieur du four près du tube porte-échantillon. Le tube porte-échantillon et celui de référence sont connectés de part et d'autre du capteur de pression différentielle, ce qui amène une nette amélioration des performances globales du système de titration.

De par cette différence structurelle, l'appareil de titration selon l'invention présente trois avantages majeurs.

Tout d'abord, son domaine d'utilisation est plus étendu du point de vue quantité de poudre et pression maximale accessible.

D'autre part, la sensibilité de mesure est accrue (limite de détection améliorée).

Enfin, son temps de réponse est plus rapide (plage dynamique plus grande et diminution du temps d'équilibre du capteur de pression différentielle).

L'appareil de cyclage selon l'invention est, quant à lui, caractérisé en ce qu'il comprend:
- un four (111) à deux compartiments (171a, 171b) ayant chacun une température ajustable, ce four étant déplaceable entre deux positions à l'aide de moyens appropriés (175);
- une conduite principale (101) reliée par une valve (V103) à une source de gaz à absorber ou adsorber, cette conduite principale étant également reliée à un capteur de pression (107);
- une première conduite de dérivation (109) reliant la conduite principale (101) via une valve (V106) à un tube porte-échantillon (113) qui est disposé dans le four (111) de façon à se trouver toujours localisé dans l'un des deux compartiments quelque soit la position du four, ledit tube porte-échantillon étant dans l'un des compartiments lorsque le four est dans un de ses deux positions, et dans l'autre compartiment lorsque le four est dans l'autre de ses deux positions;
- deux secondes conduites de dérivation (115a et 115b) indépendantes et connectables en alternance à la conduite principale (101) via deux valves correspondantes (V163a et 163b), chacune des secondes conduites (115) incluant une valve (V105), un réservoir (121) et un capteur de pression différentielle (123);
- une troisième conduite de dérivation 127 incluant une pompe (129) via une valve (V101) à la conduite principale;
- deux quatrièmes conduites de dérivation (137a et 137b) reliant chacune des secondes conduites de dérivation via une valve (V107a, V107b) à un réservoir de référence (139), lesdits réservoirs de références (139a et 139b) de ces deux quatrièmes conduites étant disposés dans le four de façon à être chacun localisés dans un des deux compartiments du four, quelque soit la position de celui-ci, un de ces réservoirs de référence se trouvant donc toujours associé au tube porte-échantillon quelque soit le compartiment dans lequel celui-ci se trouve.

Comme on peut là-encore l'apprécier, l'appareil de cyclage selon l'invention comprend deux fours et deux enceintes sous différentes pressions d'hydrogène, qui sont couplés à un interface informatisé simple et efficace. Il permet de réaliser rapidement des mesures à deux pressions différentes et à deux températures différentes, et dès lors de caractériser la dégradation des propriétés de stockage d'une substance telle qu'hydrure métallique soumis aux cycles d'absorption ou adsorption/désorption.

Tel que précédemment indiqué, une des principales applications de ces deux appareils est de caractériser de manière plus efficace et de façon plus précise les plus récents matériaux de stockage de l'hydrogène, du fait qu'ils sont particulièrement adaptés pour la mesure des cinétiques d'absorption-désorption très rapides.

Il convient toutefois de mentionner que ces appareils sont susceptibles de nombreuses autres applications, tels que l'absorption-désorption d'autres gaz, l'adsorption, par exemple, du gaz naturel, les problèmes d'oxydation et de réduction des matériaux, etc...

L'invention et ses avantages seront mieux compris à la lecture de la description non limitative qui suit de deux modes de réalisation préférés donnée en se référant à des résultats d'essai.

### Brève présentation des dessins

Dans les dessins annexés:
la Figure 1, identifiée comme "art antérieur", est une représentation schématique d'un appareil existant de titration des gaz;
1a Figure 2 est une vue générale d'un appareil de titration des gaz selon l'invention;
la Figure 3 est une représentation schématique de l'appareil de titration des gaz illustré sur la Figure 2;
la Figure 4 est une courbe PCT donnant la valeur de la pression mesurée à vide en fonction du rapport H/M mesuré et normalisé lorsqu'on utilise un appareil existant tel qu'illustré sur la Figure 1 (■) et lorsqu'on utilise un appareil selon l'invention tel qu'illustré sur les figures 2 et 3 (●);
la Figure 5a est une courbe cinétique (dynamique) donnant la valeur du rapport H/M mesuré et normalisé à vide en fonction du temps lorsqu'on utilise un appareil selon l'invention;
la Figure 5b est une courbe similaire à celle de la Figure 5a, mais obtenue avec un appareil existant, sans aucun tube de référence dans le four;
la Figure 6 est une courbe PCT (pression=f(H/M)) obtenue avec un appareil selon l'invention sur un échantillon de 1,1696 g de LaNi₅, à une température de 30°C;
la Figure 7 est une courbe PCT obtenue avec un appareil selon l'invention sur un échantillon de 154,2 mg de Mg₂Ni, à une température de 350°C;
la Figure 8 est une courbe dynamique (H/M=f(temps) obtenue avec un appareil selon l'invention sur un échantillon de 195 mg d'un matériau nanocristallin à base de magnesium à une température de 300°C, la pression d'absorption étant de 200 psi (1380 kN/m²), celle de désorption de 0 psi (0 kN/m²);
la Figure 9 est une vue générale d'un appareil de cyclage selon l'invention;
la Figure 10 est une vue illustrant le rail de guidage du four, les deux réservoirs de référence et le tube porte-échantillon de l'appareil de cyclage illustré sur la Figure 9;
la Figure 11 est une représentation schématique de l'appareil de cyclage illustré sur les figures 9 et 10;
la Figure 12 est un courbe de cyclage dynamique mesurée sur un échantillon de 403,7 mg de LaNi₅ avec l'appareil illustré sur les Figures 9 à 11, cette courbe donnant la valeur du rapport H/M en fonction du temps pour une pression d'absorption de 120 psi (830 kN/m² ) et une pression de désorption de 35 psi (240 kN/m²), les deux compartiments du four étant maintenus à 50°C;
la Figure 13 est une courbe de cyclage mesurée sur un échantillon de 403,7 mg de LaNi₅ avec l'appareil illustré sur les Figures 9 à 11, cette courbe donnant la température de l'échantillon en fonction du temps sous une pression d'absorption de 120 psi (830 kN/m²) et une pression de désorption de 35 psi (240 kN/m²), les deux compartiments du four étant maintenus à 50°C;
la Figure 14 est une courbe donnant les valeurs du rapport H/M en fonction du temps lors du premier cycle et du 350ème cycle d'absorption-désorption d'un échantillon de 411.5mg de Mg₂Ni, les valeurs ayant été mesurées par l'appareil illustré sur les figures 9 à 11 sous une pression d'absorption de 270 psi (1860 kN/m²) et une pression de désorption de 30 psi (205 kN/m²), les deux compartiments du four étant maintenus à 335°C.

### Description des deux modes de réalisation préférés de l'invention

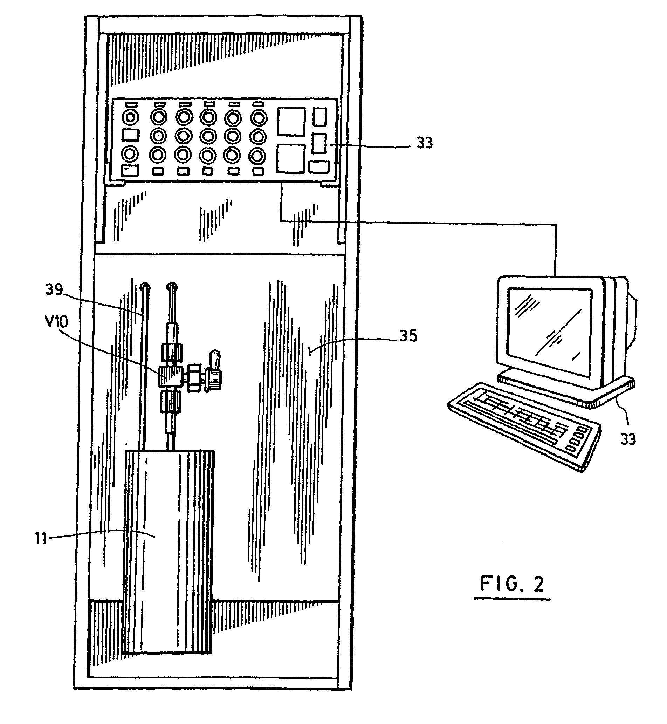

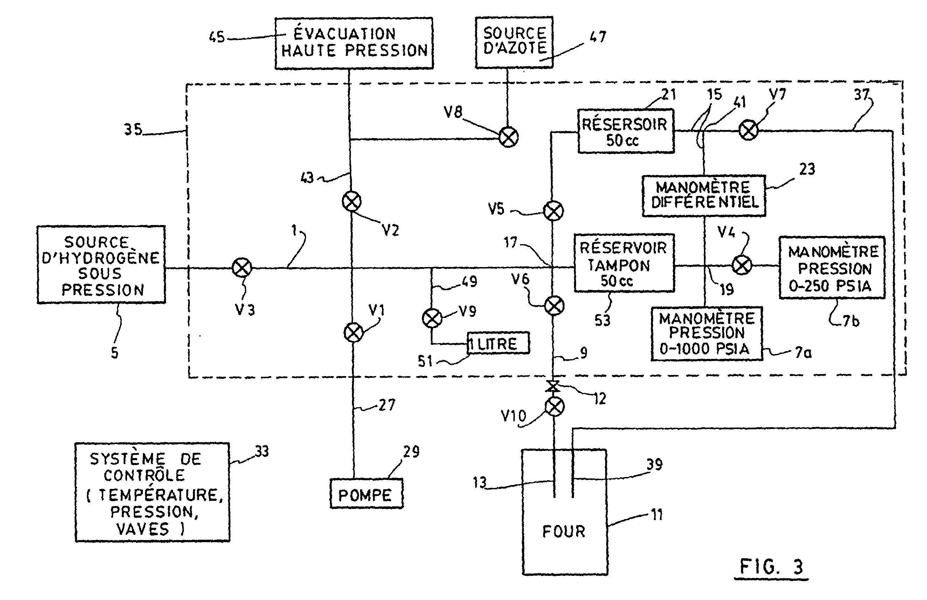

L'appareil de titration des gaz selon l'invention tel qu'illustré sur les Figures 2 et 3 comprend une conduite principale 1 reliée par une valve V3 à une source 5 de gaz sous pression. Dans le cas du mode de réalisation préféré ci-après exemplifié, il s'agit de l'hydrogène. L'appareil selon l'invention pourrait toutefois être utilisé avec n'importe quel autre gaz.

La conduite principale 1 est reliée directement à un premier capteur de pression (manomètre) 7a capable de mesurer des pressions allant jusqu'à 1000 psia (6900 kN/m² ). Elle est aussi reliée via une valve V4 à un second capteur de pression 7b plus précis mais capable de mesurer des pressions allant jusqu'à 250 psia seulement (1700 kN/m²). On comprendra qu'on utilisera ce second capteur 7b que lorsque la pression de gaz injectée dans l'appareil est inférieure à 250 psia. Si cette pression est supérieure à 250 psia, la valve V4 sera automatiquement fermée et seul le capteur 7a effectuera la mesure de pression voulue.

L'appareil de titration selon l'invention comprend également une première conduite de dérivation 9 reliant la conduite principale 1 via une valve V6 à un tube porte-échantillon 13 monté de façon détachable au moyen d'un raccord d'étanchéité 12 et pourvu d'une sonde de température interne (non illustrée). Ce tube 13 est destiné à recevoir l'échantillon dont les propriétés d'absorption ou adsorption/désorption sont à mesurer. En usage, ce tube est disposé dans un four 11 dont la température peut être ajustée et contrôlée à volonté. Un valve manuelle V10 est disposée entre le raccord à étanchéité 12 et le tube porte-échantillon 13. Cette valve est gardée en permanence ouverte, sauf lors de la manipulation du tube 13.

L'appareil de titration selon l'invention comprend aussi une seconde conduite de dérivation 15. Celle-ci a une première extrémité 17 reliée à la conduite principale sensiblement au même niveau que la première conduite de dérivation 9, et une seconde extrémité 19 reliée à la conduite principale au même niveau et/ou en amont des capteurs de pression 7a et 7b. Cette seconde conduite de dérivation 15 inclut un petit réservoir 21 de 50cc, et un capteur de pression différentielle 23.

L'appareil de titration selon l'invention comprend en outre une troisième conduite de dérivation 27 reliant une pompe 29 à vide via une valve V1 à la conduite principale 1, en amont de la jonction 17.

À trois différences mineures près, à savoir l'absence des valves V11' et V12' illustrées sur la Figure 1 et l'usage de deux capteurs de pression 7a et 7b plutôt que d'un seul 7', la structure de base de l'appareil selon l'invention est jusque-là identique à celle des appareils de titration existants.

La principale différence structurelle distinguant l'invention de l'état de la technique réside dans la présence d'une quatrième conduite de dérivation 37. Celle-ci relie la seconde conduite de dérivation 15 via une valve V7 à un tube dit "de référence" 39, qui est disposé dans le four 11 à proximité du tube porte-échantillon 13. Le tube de référence a les mêmes caractéristiques (structure, volume, ...) que le tube porte-échantillon.

La jonction 41 entre la quatrième conduite de dérivation 37 et la seconde conduite 15 est disposée entre le réservoir 21 et le capteur de pression différentielle 23.

Une cinquième conduite de dérivation 49 est reliée à la conduite principale 1, en amont des jonctions de celle-ci avec les première et seconde conduites de dérivation 9 et 15. Cette cinquième conduite relie un gros réservoir de désorption 51 de 1 litre via une valve V9 à la conduite principale.

Une sixième et dernière conduite de dérivation 43 est enfin reliée à la conduite principale, sensiblement au niveau de la jonction de celle-ci avec la troisième conduite de dérivation 27. Cette sixième conduite 43 relie la conduite principale 1 via une valve V2 à une évacuation haute pression 45 et à une source 47 de gaz inerte sous pression tel que l'azote, l'argon ou l'hélium. Une valve V8 est disposée entre cette source 47 de gaz et la conduite 43.

Un petit réservoir "tampon" 53 de 50cc est avantageusement disposé sur la conduite principale, entre les jonctions 17 et 19. Ce réservoir tampon 53 sert à compenser les différences du volume dans le circuit en fonction de la longueur de chaque conduite. En fonction de la compensation à effectuer, qui est aisément déterminable lors de la calibration de l'appareil, ce réservoir tampon peut être rempli de mitrailles de métal pour réduire son volume "mort" et de là ajuster son volume résiduel à la différence de volume à compenser dans les conduites.

Comme dans le cas des appareils existants, la plupart des composants de l'appareil sont isolés dans une enceinte isotherme 35. Les valves, les sources d'hydrogène et d'azote, la pompe, l'évacuation haute pression et la température du four sont contrôlés à distance en temps réel par un système informatisé 33 aisément programmable.

L'appareil de titration des gaz selon l'invention tel qu'il vient d'être décrit fonctionne comme suit.

Après assemblage du circuit, on procède à une calibration en vue de déterminer le volume mort dans les conduites entre chaque valve et s'assurer d'avoir un même volume de chaque côté du manomètre différentiel lors des mesures (comme on le comprendra mieux après). C'est à cette première étape que le réservoir tampon 53 est rempli ou non de mitrailles de fer ou tout autre métal qui n'absorbe pas l'hydrogène.

Après avoir inséré l'échantillon d'hydrure métallique à tester dans le tube porte-échantillon 13, et avoir fermé les valves V2 et V3 des cinquième et sixième conduites de dérivation, on procède à une purge de l'ensemble des conduites. On actionne alors la pompe 29 et on ouvre la valve V1. On ouvre ensuite les diverses autres valves des première, seconde et quatrième conduites de dérivation 9, 15 et 37.

On peut alors amorcer les mesures d'absorption. Pour ce faire, on fixe les pressions voulues d'absorption ainsi que la température du four 11 et on ferme les valves V6 et V7 menant au tube porte-échantillon 13 et au tube de référence 39, qui sont donc alors tous les deux sous vide.

On ouvre et referme la valve V3 pour relier l'ensemble des conduites à la source d'hydrogène 5 et les placer sous la pression fixée d'absorption.

Ceci fait, on ferme la valve V5 puis on ouvre en même temps les valves V6 et V7. Ceci crée une détente de gaz vers les tubes 13 et 39. On procède alors de mesures simultanées de pression à l'aide des capteurs 7a et/ou 7b et 23.

Une fois les mesures complétées, on actionne l'évacuation haute pression 45 et on ouvre la valve V2 après avoir fermé les valves V6 et V7 en vue de purger l'hydrogène de l'appareil. Avant d'ouvrir la valve V2, on peut ouvrir la valve V8 en vue de mélanger de l'azote en provenance de la source 47 avec l'hydrogène évacué dans l'appareil. Ceci améliore la sécurité d'emploi de l'appareil en réduisant les risques d'incendie.

Une fois la purge complétée, on est alors prêt à amorcer les mesures de désorption.

Pour ce faire, on ouvre la valve V9 de la cinquième conduite de dérivation de façon à relier le gros réservoir 51 à la conduite principale. Ce volume "vide" supplémentaire "améliore" la désorption. On comprendra à cet effet que le volume typique des conduites et tubes de chaque côté du capteur différentiel est de l'ordre de 100cc. En ajoutant un volume de 1000cc dans le circuit, on multiplie par 10 le volume mort pour recevoir l'hydrogène déscrbé. Ceci améliore le contrôle des incréments de pression.

Après avoir ajusté la pression dans la conduite principale et fermé la valve V5, on peut alors réouvrir à nouveau les valves V6 et V7 et effectuer alors les mesures requises à l'aide des capteurs de pression 7a et/ou 7b et 23.

Une fois le tout complété, on peut alors refermer la valve V6, et soit changer l'échantillon, soit amorcer une nouvelle mesure d'absorption/désorption à une pression et/ou une température différente(s).

Tel que précédemment mentionné, l'appareil de titration des gaz selon l'invention, grâce à la présence de son tube de référence disposé à côté du tube porte-échantillon dans le four, a de nombreux avantages à comparer aux appareils existants. Parmi ces avantages, on peut citer:
- une plage d'opération plus étendue du point de vue quantité de poudre et pression maximale accessible;
- une sensibilité accrue; et
- un temps de réponse amélioré (plage dynamique plus grande).

Cet appareil est d'usage simple, En fait, son utilisation est avantageusement simplifiée et rendue plus efficace et conviviale grâce à l'utilisation d'une interface informatisée incorporée dans son système de contrôle. Ce logiciel de contrôle ne sera pas décrit ni revendiqué ci-après.

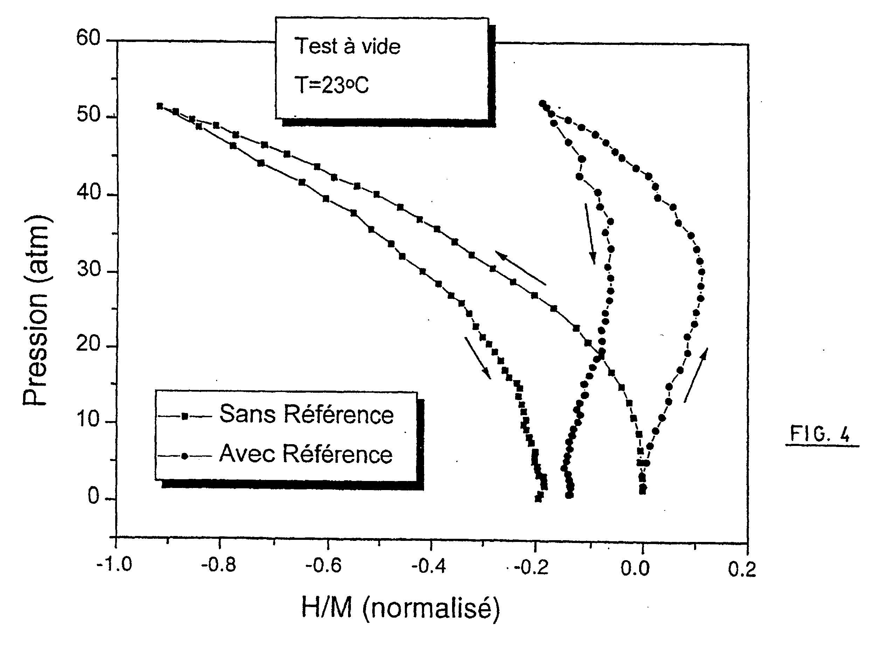

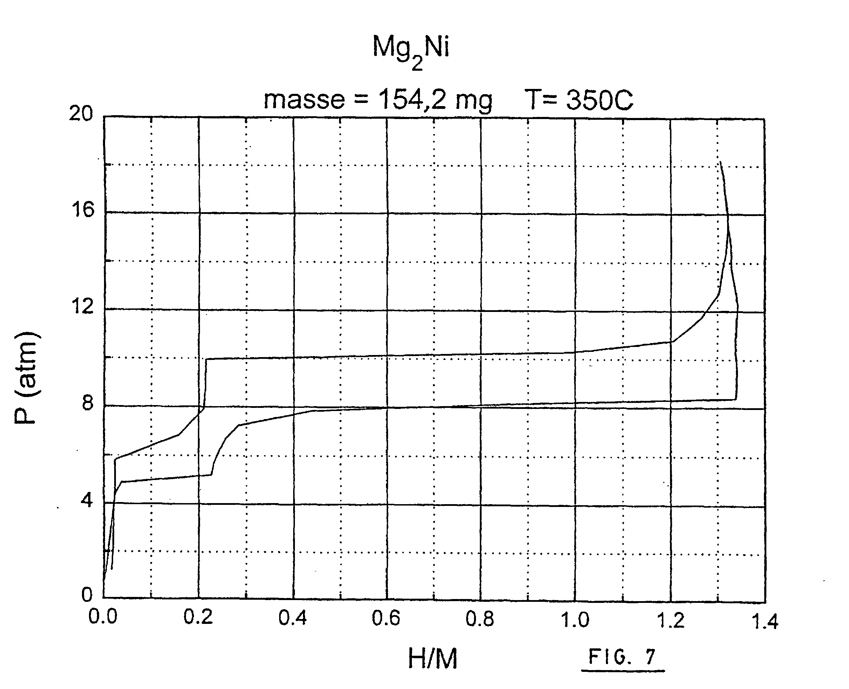

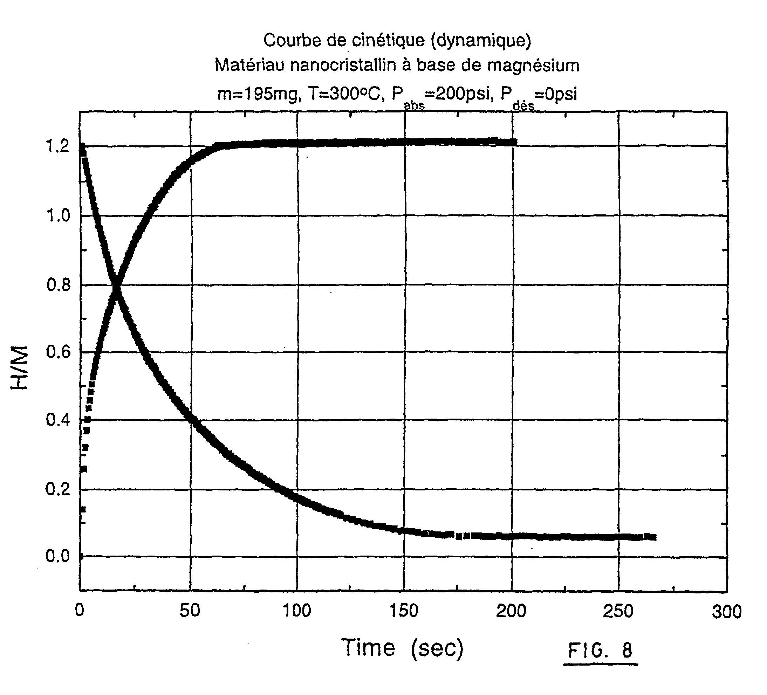

De nombreux essais ont été effectués sur plusieurs prototypes à l'Institut de Recherche d'Hydro-Québec (IREQ). Certains des résultats obtenus sont illustrés sur les Figures 4 à 8.

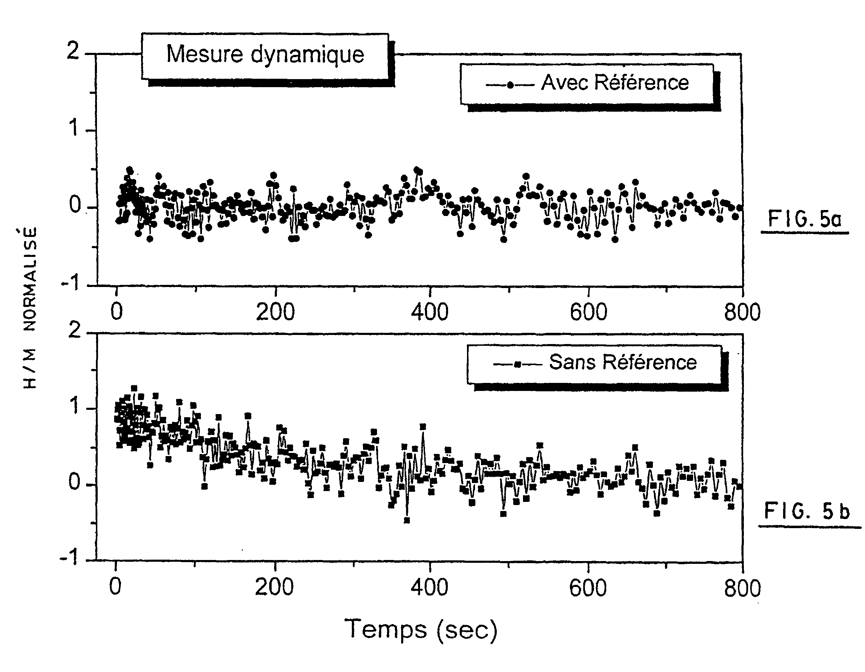

Les Figures 4 et 5 donnent des mesures PCT (pression=f(H/M)) et des mesures dynamiques effectuées avec un appareil opérant à vide (sans échantillon), lorsque celui-ci est équipé d'un tube de référence (appareil selon l'invention) et lorsqu'il n'en a pas (appareil existant).

Comme on peut le remarquer sur la Figure 4, il y a une substantielle diminution des variations de la valeur de H/M à vide lorsque l'on utilise un tube de référence (cette amélioration est d'un ordre de grandeur). De même, comme on peut le remarquer en comparant les Figures 5a et 5b, il y a aussi une très substantielle diminution du temps d'équilibre de la valeur H/M lorsqu'on utilise un tube de référence (ce temps d'équilibre passe de plus de 400 secondes sans tube de référence à environ 1 seconde avec un tube de référence). Cette dernière diminution est essentielle si les mesures d'absorption-désorption sont effectuées sur des hydrures métalliques très performants, tels que les hydrures nanocristallins décrits dans les demandes canadienne et internationale ci-dessus mentionnées, qui ont une cinétique d'absorption très rapide.

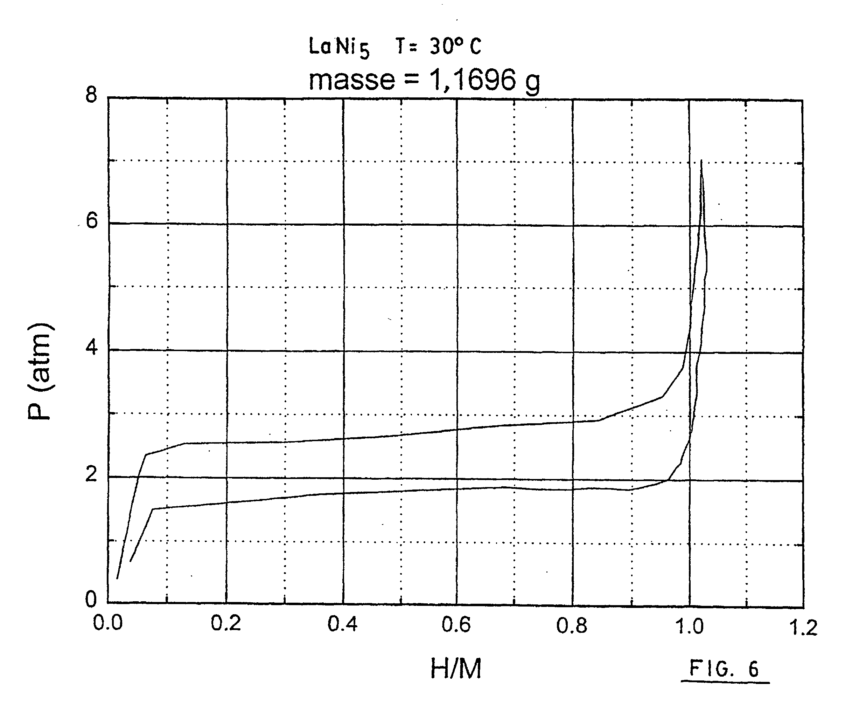

Les Figures 6 à 8 sont illustratives de la qualité des résultats que l'on peut obtenir avec divers types d'échantillons de différentes masses et à différentes températures.

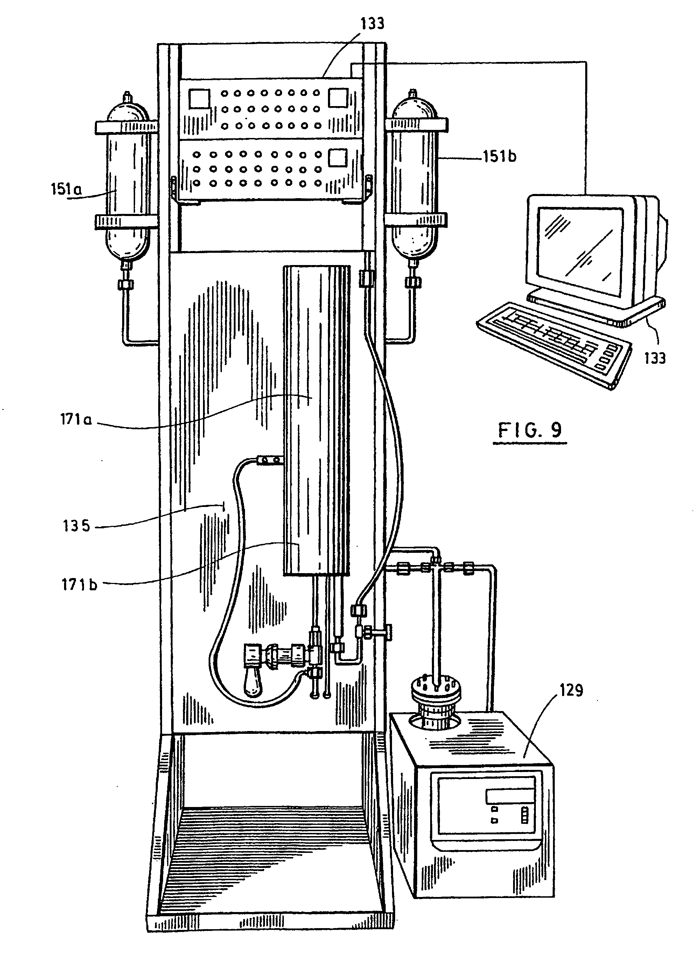

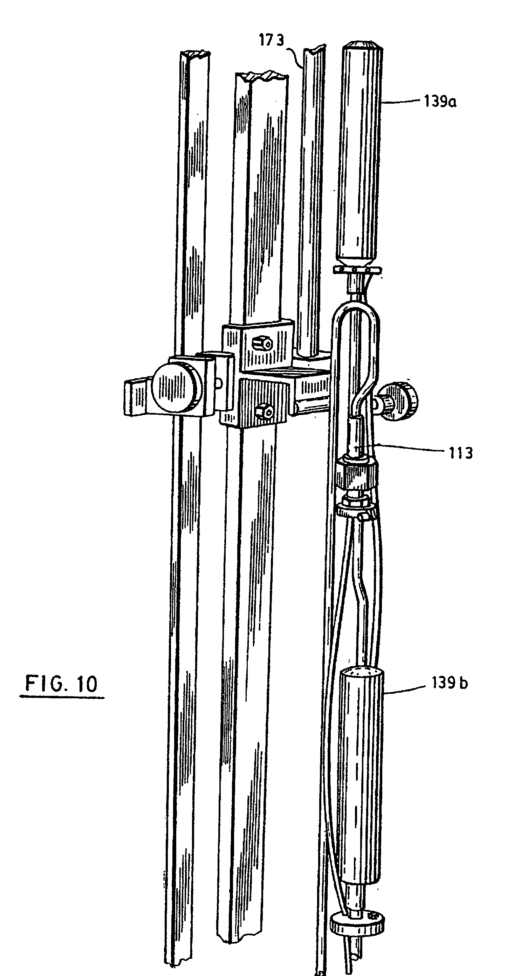

L'appareil de cyclage selon l'invention tel qu'illustré sur les Figures 9, 10 et 11 dérive directement de l'appareil de titration qui vient d'être décrit, si ce n'est qu'il est conçu pour évaluer le comportement d'un matériau absorbant ou adsorbant des gaz, et plus précisément d'un hydrure métallique, en vue de déterminer la dégradation de ses propriétés de stockage, lorsque ce matériau est soumis à un grand nombre de cycle d'absorption-désorption. Là-encore, on comprendra que l'invention n'est pas restreinte aux hydrures métalliques et que le même appareil de cyclage pourrait être utilisé pour évaluer les capacités d'absorption de n'importe quelle autre substance.

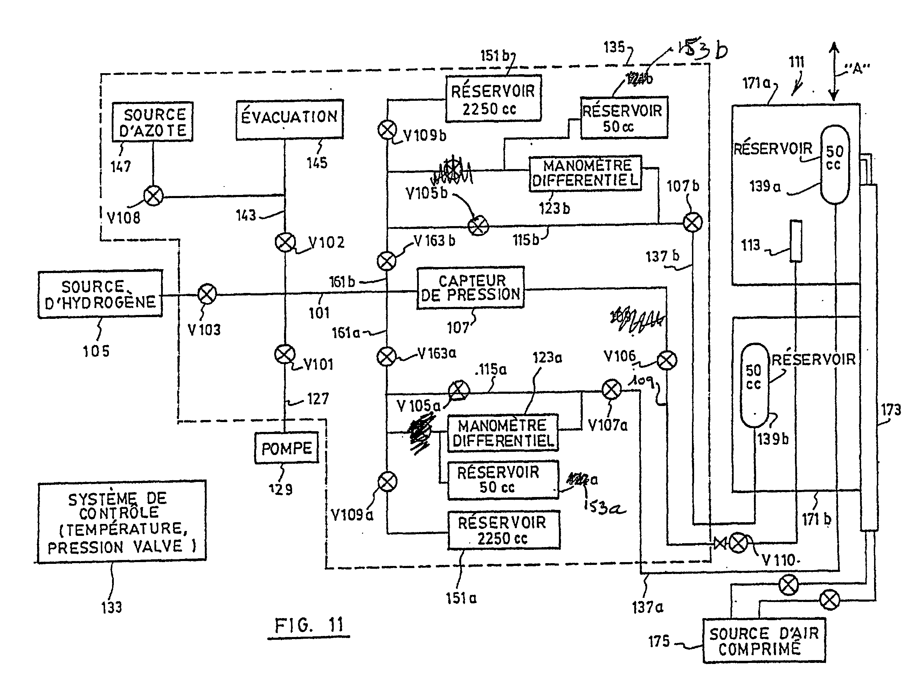

Tel qu'il ressort mieux sur la Figure 11, l'appareil de cyclage selon l'invention a une structure de base très similaire à celle de l'appareil de titration précédemment décrit. Pour cette raison, tous les éléments structurels identiques ont été identifiés de la même façon avec les mêmes numéros, auxquels ont été ajoutés le nombre 100.

Ainsi, l'appareil de cyclage comprend une conduite principale 101 reliée à une source d'hydrogène 105 via une valve V103. Cette conduite principale inclut un capteur de pression 107.

Une première conduite de dérivation 109 relie la conduite principale 101 via des valves V106 et V110 à un tube porte-échantillon 113 monté de façon détachable au moyen d'un raccord d'étanchéité 112 et pourvu d'une sonde de température interne (non-illustrée).

Deux secondes conduites de dérivation 115a et 115b sont reliées à deux branches 161a et 161b de la conduite principale, en amont du capteur de pression 107. Ces branches sont respectivement pourvues de valves V163a et V163b. Ces secondes conduites et leur ramifications seront décrites ci-après plus en détails.

Une troisième conduite de dérivation 127 relie la conduite principale à une pompe à vide 129.

Deux quatrièmes conduites de dérivations 137a et 137b incluant des valves V107a et V107b relient respectivement les secondes conduites 115a et 115b à deux tubes de références 139a et 139b ayant la forme de petits réservoirs de 50cc disposés respectivement au-dessus et en-dessous du tube porte-échantillon 113.

Enfin, une dernière conduite de dérivation 143 relie la conduite principale 101 à un dispositif d'évacuation 145 via une valve V102. Une source d'azote 147 est reliée via une valve V108 à cette dernière conduite 143 pour mélanger de l'azote avec le gaz évacué par cette conduite 143 et ainsi réduire les risques d'incendie quand ce gaz est inflammable.

Deux gros réservoirs 151a et 151b offrant chacun un volume mort de 2,25 litres sont respectivement reliés par des valves V109a et V109b aux secondes conduites 115a et 115b. On comprendra que le volume de ces réservoirs peut bien sûr être changé à volonté.

Des valves 105a et 105b et des capteurs de pression différentielle 123a et 123b sont montés en série sur les secondes conduites 115a et 115b.

Enfin, deux petits réservoirs 153a et 153b de 50cc chacun sont respectivement reliés aux secondes conduites de dérivations 115a et 115b, entre les valves V105a et V105b et les capteurs de pression différentielle 123a et 123b.

Comme on peut donc le constater, chacune des secondes conduites de dérivation 115a et 115b à laquelle est associé un tube de référence 139a ou 139b est de structure et de fonctionnement identique au circuit formé par les seconde, quatrième et cinquième conduites de dérivation 15, 37 et 49 de l'appareil de titration précédemment décrit. La seule différence provient du fait que ces secondes conduites 115a et 115b sont connectables en alternance à même la conduite principale 101, à l'aide des valves V161a et V161b, ceci étant bien sûr essentiel pour obtenir le cyclage voulu.

On comprendra donc que la séquence d'opération est absolument identique à celle qui a été décrite en détail, si ce n'est que, lorsque le tube de référence 139a est utilisé pour une mesure, la valve V163b est fermée pour isoler la seconde conduite 115b et tous les éléments associés à celle-ci, tandis que lorsque le tube de référence 139b est utilisé, alors la valve V163a est fermée.

La plupart des éléments ci-dessus décrits sont disposés dans une enceinte isotherme 135 et reliés à un système de contrôle 133.

Pour assurer une variation de température lors du cyclage, le four 111 dans lequel le tube porte-échantillon 113 et les tubes de références 139a et b sont placés, peut être composé de deux compartiments 171a et 171b coaxiaux, dont les températures peuvent être indépendamment ajustées et contrôlées. Ces deux compartiments sont montés sur un vérin 173 relié à une source d'air comprimé 175 et actionnable à distance à l'aide de celle-ci. À chaque cycle, le vérin 173 déplace ensemble les deux compartiments du four 111 de bas et haut et vice versa, tel qu'indiqué par la flèche A. En position basse, qui est celle illustrée sur la Figure 11, le tube porte-échantillon 113 et le tube de référence 139a se trouvent tous les deux dans le compartiment 171a. C'est alors qu'on fait l'absorption/désorption voulue à la température du compartiment 171a, en ouvrant la seconde conduite 115a. En position haute, le tube porte-échantillon 113 se trouve avec le tube de référence 139b dans le compartiment 171b. C'est alors qu'on fait la désorption/absorption voulue à la température du compartiment 171b, en ouvrant la seconde conduite 115b.

Comme on peut donc le constater, l'appareil de cyclage selon l'invention utilise un four à deux compartiments ainsi que deux enceintes à pression pour l'absorption et la désorption. Ceci permet de substantiellement réduire le temps nécessaire pour la détermination de l'évolution en usage des propriétés de matériaux absorbants tels que des hydrures métalliques.

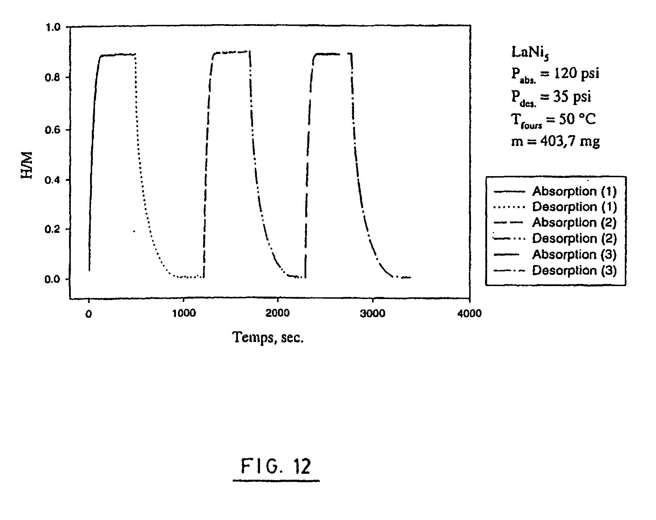

Des essais ont été effectués sur un prototype d'appareil de cyclage tel que précédemment décrit. Certains résultats obtenus sont rapportés sur les figures 12 à 14.

La Figure 12 est une courbe de cyclage dynamique (H/M=f(temps)) obtenue par un échantillon de LaNi₅. Cette courbe illustre bien la répétitivité des cycles. Dans ce cas, les deux compartiments du four étaient maintenus à une même température de 50°C.

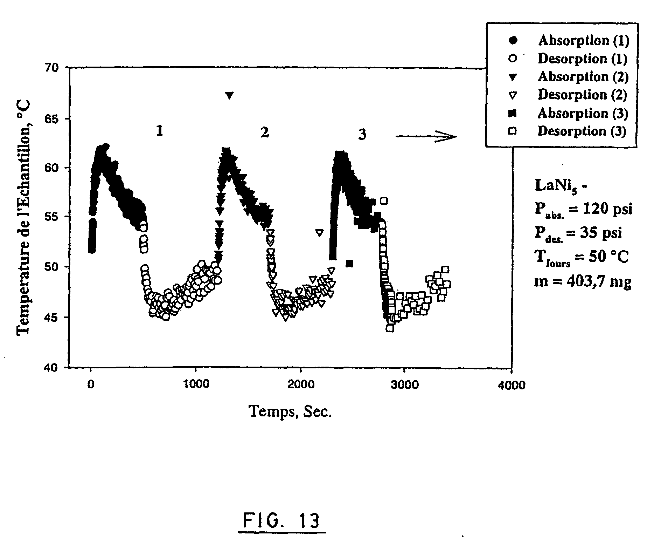

La Figure 13 est une courbe de cyclage donnant la valeur de la température d'un échantillon de LaNi₅ en fonction du temps. Là-encore, les deux compartiments du four étaient maintenus à une même température de 50°C. Ceci montre que la température de l'échantillon varie de façon substantielle lors des cycles d'absorption/désorption.

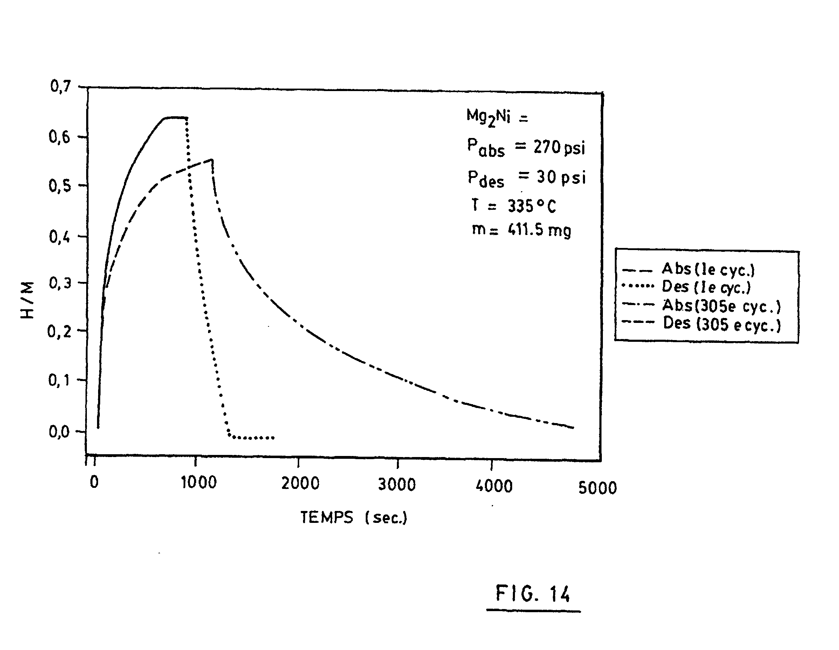

Enfin, la Figure 14 est une courbe dynamique montrant la différence de comportement d'un échantillon de Mg₂Ni entre ses 1er et 350ème cycles d'absorption/désorption. Comme on peut le voir, le matériau perd environ 15% de sa capacité d'hydrogénation et est sujet à une dégradation substantielle de sa cinétique de désorption en usage.

Il va de soi que de nombreuses modifications pourraient être apportées aux modes de réalisation qui viennent d'être décrits sans sortir du cadre de la présente invention telle que définie dans les revendications annexées. Ainsi, on comprendra que l'on pourrait aisément étendre la page de température dans les domaines de hautes et basses températures. On pourrait, par exemple, utiliser un réfrigérateur pour l'adsorption à basse température, la désorption à haute température s'effectuant toujours dans un four. Il y a donc une possibilité d'usage d'autres méthodes alternatives de désorption ou d'absorption.

## Revendications

1. Un appareil de titration d'un gaz, du type comprenant:
- une conduite principale (1) reliée par un valve (V3) à une source de gaz sous pression (5), cette conduite principale étant également reliée à un premier capteur de pression (7a);
- une première conduite de dérivation (9) reliant la conduite principale (1) via une valve (V6) à un tube porte-échantillon (13) qui est disposé dans un four (11) à température ajustable et est destiné à recevoir un échantillon d'une substance dont les propriétés d'absorption ou adsorption/désorption du gaz sont à mesurer;
- une seconde conduite de dérivation (15) ayant des extrémités 17, 19 reliées à la conduite principale, au moins une (19) de ces extrémités étant en aval de la première conduite de dérivation (9), cette seconde conduite de dérivation reliant en série une valve (V5), un réservoir (21) et un capteur de pression différentielle (23);
- une troisième conduite de dérivation (27) reliant une pompe (29) via une valve (V1) à la conduite principale (1);
- une enceinte isotherme (35) pour maintenir à une température stable et contrôlée les conduites et valves; et
- un système de contrôle (33) permettant d'ajuster et contrôler à volonté la température du four (11), la pression du gaz et les valves en temps réel; ledit appareil étant **caractérisé en ce qu'**il comprend en outre:
- une quatrième conduite de dérivation (37) connectée via une valve (V7) à un tube de référence (39) qui est de même caractéristique que le tube porte échantillon et est disposé avec ce dernier dans le four (11), ladite quatrième conduite étant reliée à la seconde conduite (15) entre le réservoir (21) de celle-ci et le capteur de pression différentielle (23).

2. Un appareil tel que défini dans la revendication 1, **caractérisé en ce qu'**il comprend en outre:
- un réservoir tampon (53) monté sur la conduite principale entre les extrémités (17) et (19) de la seconde conduite de dérivation (15), ce réservoir tampon (53) étant remplissable de mitrailles et utilisable pour compenser toute différence de volume dans les circuits principal et de dérivation; et
- une cinquième conduite de dérivation (49) reliée à la conduite principale en amont des première et seconde conduites de dérivation (9, 15), cette cinquième conduite de dérivation étant connectée à un réservoir (51) via une valve (V9), ledit réservoir (51) servant à la désorption en augmentant substantiellement le volume mort des conduites lorsque la valve (V9) est ouverte.

3. Un appareil tel que défini dans la revendication 2, **caractérisé en ce qu'**il comprend en outre:
- une sixième conduite de dérivation (43) reliée à la conduite principale, cette sixième conduite de dérivation étant connectée à une évacuation de gaz (45) via une valve (V2).

4. Un appareil tel que défini dans la revendication 3, **caractérisé en ce qu'**il comprend en outre:
- une source de gaz inerte (47) reliée via une valve (V8) à la sixième conduite de dérivation (43) pour mélanger du gaz inerte avec le gaz évacué par cette sixième conduite de dérivation et ainsi réduire les risques d'incendie lorsque ce gaz est inflammable.

5. Un appareil tel que défini dans l'une quelconque des revendications 1 à 4, **caractérisé en ce qu'**il comprend en outre
- un deuxième capteur de pression (7b) relié à la conduite principale via un valve (V4), ce deuxième capteur étant adapté pour la mesure de basses pressions et utilisé uniquement en présence de telles basses pressions.

6. Usage d'un appareil tel que défini dans l'une quelconque des revendications 1 à 5 pour évaluer la capacité de stockage en hydrogène d'un hydrure métallique en fonction de la pression d'opération (pression=f(H/M), où H est le nombre d'atomes d'hydrogène et M le nombre d'atomes de métal).

7. Usage d'un appareil tel que défini dans l'une quelconque des revendications 1 à 5 pour évaluer la cinétique d'absorption et de désorption en hydrogène d'un hydrure métallique (H/M=f(temps)) où H est le nombre d'atomes d'hydrogène et M le nombre d'atomes de métal).

8. Un appareil de cyclage pour évaluer le comportement d'une substance absorbante ou adsorbante lorsque cette substance est soumise à un grand nombre de cycles d'absorption ou adsorption/désorption, **caractérisé en ce qu'**il comprend:
- un four (111) à deux compartiments (171a, 171b) ayant chacun une température ajustable, ce four étant déplaceable entre deux positions à l'aide de moyens appropriés (175);
- une conduite principale (101) reliée par une valve (V103) à une source de gaz à absorber ou adsorber, cette conduite principale étant également reliée à un capteur de pression (107);
- une première conduite de dérivation (109) reliant la conduite principale (101) via une valve (V106) à un tube porte-échantillon (113) qui est disposé dans le four (111) de façon à se trouver toujours localisé dans l'un des deux compartiments quelque soit la position du four, ledit tube porte-échantillon étant dans l'un des compartiments lorsque le four est dans un de ses deux positions, et dans l'autre compartiment lorsque le four est dans l'autre de ses deux positions;
- deux secondes conduites de dérivation (115a et 115b) indépendantes et connectables en alternance à la conduite principale (101) via deux valves correspondantes (V163a et 163b), chacune des secondes conduites (115) incluant une valve (V105), un réservoir (121) et un capteur de pression différentielle (123);
- une troisième conduite de dérivation 127 reliant une pompe (129) via une valve (V101) à la conduite principale; et
- deux quatrièmes conduites de dérivation (137a et 137b) reliant chacune une des secondes conduites de dérivation via une valve (V107a, V107b) à un tube de référence (139), lesdits tubes de références (139a et 139b) de ces deux quatrièmes conduites étant disposées dans le four de façon à être chacun localisés dans un des deux compartiments du four, quelque soit la position de celui-ci, un de ces tubes de référence se trouvant toujours associé au tube porte-échantillon quelque soit le compartiment dans lequel celui-ci se trouve.

9. Un appareil tel que défini dans la revendication 8, **caractérisé en ce qu'**il comprend en outre:
- deux réservoirs (151a, 151b) respectivement reliés via des valves (V109a, V109b) aux secondes conduites de dérivation (115a, 115b), ces réservoirs (151a, 151b) servant à favoriser la désorption en augmentant substantiellement le volume mort des conduites lorsque les valves (V109a, V109b) sont ouvertes.

10. Un appareil tel que défini dans la revendication 9, **caractérisé en ce qu'**il comprend en outre:
- une autre conduite de dérivation (143) reliée à la conduite principale (101), cette autre conduite de dérivation étant connectée à une évacuation de gaz (145) via une valve (V102).

11. Un appareil tel que défini dans la revendication 10, **caractérisé en ce qu'**il comprend en outre:
- une source de gaz inerte (147) reliée via une valve (V108) à l'autre conduite de dérivation (143) pour mélanger du gaz inerte avec le gaz évacué par cette autre conduite de dérivation et ainsi réduire les risques d'incendie lorsque ce gaz est inflammable.

12. Un appareil tel que défini dans l'une quelconque des revendications 8 à 11, **caractérisé en ce qu'**il comprend en outre:
- une sonde de température interne disposée dans le porte-échantillon (113).

13. Usage d'un appareil tel que défini dans l'une quelconque des revendications 8 à 12, pour évaluer en fonction du temps la cinétique d'absorption et de désorption en hydrogène d'un hydrure métallique (H/M=f(temps) où H est le nombre d'atomes d'hydrogène et M le nombre d'atomes de métal).

14. Usage d'un appareil tel que défini dans la revendication 12 pour évaluer la variation de la température d'absorption d'un hydrure métallique en fonction du temps.

## Claims

1. An apparatus for the titration of a gas, of the type comprising:
- a main duct (1) connected by a valve (V3) to a source of gas under pressure (5), said main duct being also connected to a first pressure sensor (7a);
- a first derivation duct (9) connecting the main duct (1) *via* a valve (V6) to a sample carrying tube (13) which is located in a furnace (11) of adjustable temperature and is devised to receive a sample of a substance having gas absorption or adsorption/desorption properties to be measured;
- a second derivative duct (15) having ends 17,19 connected to the main duct, at least one (19) of said ends being downstream of the first derivation duct (9), said second derivation duct connecting in series a valve (V5), a tank (21) and a differential pressure sensor (23);
- a third derivation duct (27) connecting a pump (29) *via* a valve (VI) to the main duct (1);
- an isothermal enclosure (35) for keeping the ducts and valves at a stable and controlled temperature; and
- a control system 33 for adjusting and controlling at will the temperature of the furnace (11), the pressure of the gas and the valves in real time;
said apparatus being **characterized in that** it further comprises:
- a fourth derivation duct (37) connected *via* a valve (V7) to a reference tube (39) which has the same characteristics as the sample carrying tube and is located together with the same in the furnace (11), said fourth derivation duct being connected to the second duct (15) between the tank (21) thereof and the differential pressure sensor (23).

2. An apparatus as defined in claim 1, **characterized in that** it further comprises:
- a buffer tank (53) mounted onto the main duct between the ends (17) and (19) of the second derivation duct (15), said buffer tank (53) being capable of being filled up with chunks and used for compensating any difference in volume in the main and derivation ducts; and
- a fifth derivation duct (49) connected to the main duct upstream the first and second derivation ducts (9,15), this fifth derivation duct being connected to a tank (51) *via* a valve (V9), said tank (51) being used for the desorption by increasing substantially the dead space of the duct when the valve (V9) is open.

3. An apparatus as defined in claim 2, **characterized in that** it further comprises:
- a sixth derivation duct (43) connected to the main duct, said sixth derivation duct being connected to a gas outlet (45) *via* a valve (V2).

4. An apparatus as defined in claim 3, **characterized in that** it further comprises:
- a source of inert gas (47) connected *via* a valve (V8) to the sixth derivation duct (43) for mixing the inert gas with the gas exiting through this sixth derivation duct and thus reducing the risk of fire when this gas is inflammable.

5. An apparatus as defined in any one of claims 1 to 4, **characterized in that** it further comprises:
- a second pressure sensor (7b) connected to the main duct *via* a valve (V4), this second sensor being adapted for measuring low pressures and used exclusively in the presence of such low pressures.

6. The use of an apparatus as defined in any one of claims 1 to 5 for evaluating the hydrogen storage capacity of a metal hydride as a function of the operating pressure (pressure = f(H/M), where H is the number of hydrogen atoms and M is the number of metal atoms).

7. The use of an apparatus as defined in any one of claims 1 to 5 for evaluating the hydrogen absorption and desorption kinetics of a metal hydride (H/M=f (time), where H is the number of hydrogen atoms and M is the number of metal atoms).

8. A cycling apparatus for evaluating the behaviour of a gas absorbing of adsorbing substance when this substance is subjected to a large number of absorption/desorption cycles, **characterized in that** it comprises:
- a furnace (111) with two compartments (171a, 171b) each having an adjustable temperature, said furnace being movable between two positions by suitable means (175);
- a main duct (101) connected by a valve (V103) to the source of gas to be absorbed or adsorbed, this main duct being also connected to a pressure sensor (107);
- a first derivation duct (109) connecting the main conduct (101) via a valve (V106) to a sample carrying tube (113) which is located within the furnace (111) in such a manner as to be always positioned in one of the compartments whatever be the position of the furnace, said sample carrying tube being in one of the compartments when the furnace is in one of its two positions, and in the other compartment when the furnace is in the other of its two positions;
- two second derivation ducts (115a and 115b) independent from each other and connectable alternatively to the main duct (101) *via* two corresponding valves (V163a and 163b), each of said second derivation ducts (115) including a valve (V105), a tank (121) and a differential pressure sensor (123);
- a third derivation duct (127) connecting a pump (129) *via* a valve (V101) to the main duct; and
- two fourth derivation ducts (137a and 137b) each connecting one of the second derivation ducts *via* a valve (V107a, V107b) to a reference tube (139), said reference tubes (139a and 139b) of these fourth derivation ducts being positioned within the furnace in such a manner as to be each positioned in one of the compartments of the furnace whatever be the position of the same, one of the reference tubes being always associated to the sample carrying tube whatever be the compartment in which the latter is located.

9. An apparatus as claimed in claim 8, **characterized in that** it further comprises:
- two tanks (151a, 151b) respectively connected *via* valves (V109a, V109b) to the second derivation ducts (115a, 115b), these tanks (151a, 151b) being used to facilitate the desorption by substantially increasing the dead space of the ducts when the valve (V109a, V109b) are opened.

10. An apparatus as claimed in claim 9, **characterized in that** it further comprises:
- another derivation duct (143) connected to the main duct (101) said other derivation duct being connected to a gas exit (145) *via* a valve (V102).

11. An apparatus as defined in claim 10, **characterized in that** it further comprises:
- a source of inert gas (147) connected *via* a valve (V108) to the other derivation duct (143) for mixing the inert gas with the gas exiting through this other derivation duct and thus for reducing the risk of fire when this gas is inflammable.

12. An apparatus as defined in any one of claims 8 to 11, **characterized in that** it further comprises:
- an internal temperature sensor located within sample carrying tube (113).

13. The use of an apparatus as defined in any one of claims 8 to 12 for evaluating the hydrogen absorption and desorption kinetics of a metal hydride as a function of the time (H/M =f (time) where H is the number of hydrogen atoms and M is the number of metal atoms).

14. The use of an apparatus as defined in claim 12 for evaluating the variation of the absorption temperature of a metal hydride as a function of the time.

## Patentansprüche

1. Vorrichtung zum Titrieren eines Gases mit:
einer Hauptleitung (1), die über ein Ventil (V3) mit einer Zufuhr von Gas unter Druck (5) verbunden ist, wobei diese Hauptleitung außerdem mit einem ersten Drucksensor (7a) verbunden ist,
einer ersten Nebenleitung (9), die die Hauptleitung (1) über ein Ventil (V6) mit einer Probenentnahmeröhre (13) verbindet, die sich in einem Ofen (11) mit einer einstellbaren Temperatur befindet und dazu dient, eine Probe einer Substanz aufzunehmen, deren Absorptions- bzw. Adsorptions-/Desorptions-Eigenschaften als Gas gemessen werden sollen,
einer zweiten Nebenleitung (15), deren Enden (17, 19) mit der Hauptleitung verbunden sind, wobei sich wenigstens eines (19) dieser Enden unterhalb der ersten Nebenleitung (9) befindet, wobei diese zweite Nebenleitung ein ventil (v5), einen Speicher (21) und einen Differenzdrucksensor (23) in Reihe verbindet,
einer dritten Nebenleitung (27), die eine Pumpe (29) über ein Ventil (V1) mit der Hauptleitung (1) verbindet, einem Isothermengefäß (35) zum Aufrechterhalten einer stabilen und eingestellten Temperatur in den Leitungen und Ventilen und
einem Steuerungssystem (33) für das beliebige Einstellen und Steuern der Temperatur in dem Ofen (11), des Gasdruckes und der Ventile in Echtzeit, wobei die Vorrichtung **gekennzeichnet ist durch**
eine vierte Nebenleitung (37), die über ein Ventil (V7) mit einer Referenzröhre (39) verbunden ist, welche die gleichen Eigenschaften wie die Probenenthahmeröhre aufweisc und sich mit letzterer in dem Ofen (11) befindet, wobei die vierte Nebenleitung mit der zweiten Leitung (15) zwischen dem Speicher (21) derselben und dem Differenzdrucksensor (23) verbunden ist.

2. Vorrichtung nach Anspruch 1, **gekennzeichnet durch**:
einen Zwischenspeicher (53) in der Hauptleitung zwischen den Enden (17) und (19) der zweiten Nebenleitung (15), wobei dieser zwischenspeicher (53) mit Metallschrott füllbar ist und einsetzbar ist, um jegliche Volumendifferenz in den Haupt- und Nebenkreisen auszugleichen, eine fünfte Nebenleitung (49), die mit der Hauptleitung oberhalb der ersten und zweiten Nebenleitung (9, 15) verbunden ist, wobei diese fünfte Nebenleitung über ein Ventil (V9) mit einem Speicher (51) verbunden ist, wobei der Speicher (51) zum Desorbieren dient, so dass sich das Totvolumen der Leitungen wesentlich vergrößert, wenn das Ventil (V9) geöffnet wird.

3. Vorrichtung nach Anspruch 2, **gekennzeichnet durch**:
eine sechste Nebenleitung (43), die mit der Hauptleitung verbunden ist, wobei diese sechste Nebenleitung über ein Ventil (V2) mit einer Gasabpumpeinrichtung (45) verbunden ist.

4. Vorrichtung nach Anspruch 3, **gekennzeichnet durch**:
einer Inertgaszufuhr (47), die über ein Ventil (V8) mit der sechsten Nebenleitung (43) verbunden ist, um Inertgas mit dem über diese sechste Nebenleitung abgepumpten Gas zu vermischen und bei entflammbarem Gas so das Risiko einer Entzündung zu verringern.

5. Vorrichtung nach einem der Ansprüche 1 bis 4, **gekennzeichnet durch**:
einen zweiten Drucksensor (7b), der über ein Ventil (V4) mit der Hauptleitung verbunden ist, wobei dieser zweite Sensor dazu ausgelegt ist, niedrige Drücke zu messen, und ausschließlich bei derartigen niedrigen Drücken eingesetzt wird.

6. Verwendung einer Vorrichtung nach einem der Ansprüche 1 bis 5, um die Speicherkapazität eines Metallhydrids für Wasserstoff in Abhängigkeit von dem Betriebsdruck zu bestimmen (Druck = f(H/M), wobei H die Anzahl der Wasserstoffatome und M die Anzahl der Metallatome ist).

7. Verwendung einer Vorrichtung nach einem der Ansprüche 1 bis 5, um die Absorptions- und Desorptionskinetik von Wasserstoff bei einem Metallhydrid zu bestimmen (H/M = f(Zeit), wobei H die Anzahl der Wasserstoffatome und M die Anzahl der Metallatome ist).

8. Umwälzvorrichtung zum Bestimmen des Verhaltens einer absorbierenden oder adsorbierenden Substanz, wenn diese Substanz einer großen Anzahl von Absorptionsoder Adsorptions-/Desorptions-Zyklen unterworfen wird, **gekennzeichnet durch**:
einen Ofen (111) mit zwei Teilbereichen (171a, 171b), deren Temperatur jeweils einstellbar ist, wobei dieser Ofen mit Hilfe von geeigneten Mitteln (175) zwischen zwei Positionen bewegt werden kann,
eine Hauptleitung (101), die über ein Ventil (V103) mit einer Zufuhr von zu absorbierendem oder adsorbierendem Gas verbunden ist, wobei diese Hauptleitung außerdem mit einem Drucksensor (107) verbunden ist,
eine erste Nebenleitung (109), die die Hauptleitung (101 über ein Ventil (V106) mit einer Probenentnahmeröhre (113) verbindet, welche in dem Ofen (111) derart angeordnet ist, dass sie sich immer und bei jeder Position des Ofens in einem der beiden Teilbereiche befindet, wobei die Probenentnahmeröhre sich in einem der Teilbereiche befindet, wenn sich der Ofen an einer seiner beiden Positionen befindet, und sich in dem anderen Teilbereich befindet, wenn sich der Ofen an der anderen seiner beiden Positionen befindet,
zwei zweite Nebenleitungen (115a und 115b), die unabhängig und alternierend über zwei entsprechende Ventile (163a und 163b) mit der Hauptleitung (101) verbunden werden können, wobei jede der zweiten Leitungen (115)
ein Ventil (V105), einen Speicher (121) und einen Differenzdrucksensor (123) aufweist,
eine dritte Nebenleicung (127), die eine Pumpe (129) über ein Ventil (V101) mit der Hauptleitung (101) verbindet, und
zwei vierte Nebenleitungen (137a und 137b), die jeweils eine der zweiten Nebenleitungen über ein Ventil (V107a, V107b) mit einer Referenzröhre (139) verbinden, wobei diese Referenzröhren (139a und 139b) dieser beiden vierten Leitungen derart in dem Ofen angeordnet sind, dass sie sich jeweils und in jeder Position desselben in einem der beiden Teilbereiche des Ofens befinden, wobei eine dieser Referenzröhren immer und in jedem Teilbereich, in welchem sie sich befindet, der Probenentnahmeröhre zugeordnet ist.

9. Vorrichtung nach Anspruch 8, **gekennzeichnet durch**:
zwei Speicher (151a, 151b), die jeweils über Ventile (V109a, V109b) mit zweiten Nebenleitungen (115a, 115b) verbunden sind, wobei diese Speicher (151a, 151b) dazu dienen, die Desorption zu begünstigen, indem sie das Totvolumen der Leitungen wesentlich vergrößern, wenn die Ventile (V109a, V109b) geöffnet werden.

10. Vorrichtung nach Anspruch 9, **gekennzeichnet durch**:
eine weitere Nebenleitung (143), die mit der Hauptleitung (101) verbunden ist, wobei diese weitere Nebenleitung über ein Ventil (V102) mit einer Gasabpumpeinrichtung (145) verbunden ist.

11. Vorrichtung nach Anspruch 10, **gekennzeichnet durch**:
eine Inertgaszufuhr (147), die über ein Ventil (V108) mit der weiteren Nebenleitung (143) verbunden ist, um Inertgas mit dem über diese weitere Nebenleitung abgepumpten Gas zu vermischen und bei entflammbarem Gas so das Risiko einer Entzündung zu verringern.

12. Vorrichtung nach einem der Ansprüche 8 bis 11, **gekennzeichnet durch**:
eine interne Temperatursonde, die in der Probenentnahmeröhre (113) angeordnet ist.

13. Verwendung einer Vorrichtung nach einem der Ansprüche 8 bis 12 zum Bestimmen der Absorptions- und Desportionskinetik von Wasserstoff bei einem Metallhydrid in Abhängigkeit von der Zeit (H/M = f(Zeit), wobei H die Anzahl der Wasserstoffatome und M die Anzahl der Metallatome ist).

14. Verwendung einer Vorrichtung nach Anspruch 12 zum Bestimmen der Änderung der Absorptionstemperatur eines Metallhydrids in Abhängigkeit von der Zeit.
